# EUROPEAN PATENT APPLICATION

(11) **EP 1 463 214 A2**
(43) Date of publication of application: **29.09.2004**
(21) Application number: 04006435.4
(22) Date of filing: 17.03.2004
(51) Int. Cl.: H04B 7/08

(54) **Diversity reception device outputting maximized C/N ratio of synthesized signal**

(30) Priority: 26.03.2003 JP 2003085224
(71) Applicant: ALPS ELECTRIC CO., LTD., Tokyo 145-8501 (JP)
(72) Inventor: Otaki, Yukio, Ota-ku Tokyo, 145-8501 (JP); Oyama, Toru, Ota-ku Tokyo, 145-8501 (JP)
(74) Representative: Klunker . Schmitt-Nilson . Hirsch

(57) **Abstract**

A diversity reception device includes a plurality of antennas (1,3). A plurality of receiver circuits (2,4) are connected to the corresponding antennas. An adder (8) adds the received signals output from the receiver circuits. Phase shifters (7,10) allow the received signals to be input into the adder in phase with each other. A level comparator unit (11) compares the levels of the received signals output from the receiver circuits. A level variable unit (6,9) is interposed between each of the receiver circuits and the adder, and is controlled by the level comparator unit. Each of the received signals other than the received signal having the maximum level is relatively attenuated by the corresponding level variable unit in accordance with the difference of the level of the received signal from the maximum level before being input into the adder.

## Description

### BACKGROUND OF THE INVENTION

### 1. Field of the Invention

The present invention relates to diversity reception devices suitable for use in on-vehicle receivers for orthogonal frequency division multiplex (OFDM) terrestrial digital broadcasts.

### 2. Description of the Related Art

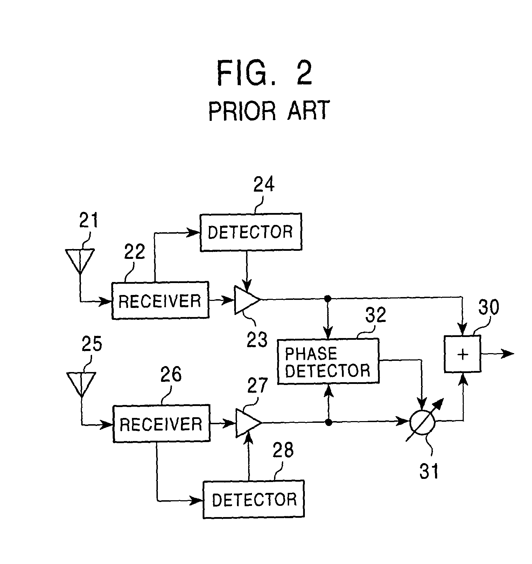

Fig. 2 illustrates the configuration of a typical known diversity reception device in which the carrier-to-noise (C/N) ratio of a diversity-synthesized signal is maximized. In Fig. 2, one reception system has an antenna 21, a receiver 22 connected to the antenna 21, a variable gain amplifier 23 connected to the output terminal of the receiver 22, and a detector 24 for detecting the level of a signal received by the receiver 22 so as to control the gain of the variable gain amplifier 23. The other reception system has an antenna 25, a receiver 26 connected to the antenna 25, a variable gain amplifier 27 connected to the output terminal of the receiver 26, and a detector 28 for detecting the level of a signal received by the receiver 26 so as to control the gain of the variable gain amplifier 27.

A received signal output from one variable gain amplifier 23 and a received signal output from the other variable gain amplifier 27 are combined by an adder 30. A phase shifter 31 is disposed between the gain amplifier 27 and the adder 30. The phase difference between a received signal output from the variable gain amplifier 23 and a received signal output from the other variable gain amplifier 27 is detected by a phase detector 32, and the phase shifter 31 is controlled in accordance with the detected phase difference.

With this configuration, the gain of the variable gain amplifier 23 is set in accordance with the level detected by the detector 24. Similarly, the gain of the variable gain amplifier 27 is set in accordance with the level detected by the detector 28. The received signal output from the variable gain amplifier 27 is controlled by the phase shifter 31 so that it becomes in phase with the received signal output from the variable gain amplifier 23. Accordingly, the C/N ratio of the signal synthesized by the adder 30 is maximized (see, for example, *Digital Musen Tsushin-no Henfukucho* (Modulation/Demodulation in Digital Wireless Communication) edited by The Institute of Electronics, Information and Communication Engineers (IEICE), February 10, 1996, pp. 189-191 and Fig. 5.19).

The received signal synthesized by the adder 30 is converted into a baseband signal by an OFDM demodulator (not shown).

In the diversity reception device configured as described above, since each variable gain amplifier 23 or 27 is feedforward-controlled in the corresponding reception system, a change in the gain of the variable gain amplifier 23 or 27 due to, for example, the ambient temperature or the power supply voltage, appears at the output side as it is. Accordingly, the level of each signal input into the adder 30 becomes different from the level set in proportion to the input level of the variable gain amplifier 23 or 27. As a result, the C/N ratio of the synthesized signal output from the adder 30 is not maximized.

### SUMMARY OF THE INVENTION

Accordingly, it is an object of the present invention to maximize the C/N ratio of a diversity synthesized signal without being influenced by variations in ambient conditions.

In order to achieve the above object, the present invention provides a diversity reception device including: a plurality of antennas; a plurality of receiver circuits connected to the corresponding antennas; an adder for adding received signals output from the receiver circuits; phase shifters for allowing the received signals to be input into the adder in phase with each other; a level comparator unit for comparing levels of the received signals output from the receiver circuits; and a level variable unit being interposed between each of the receiver circuits and the adder and being controlled by the level comparator unit. Each of the received signals other than the received signal having the maximum level is relatively attenuated by the level variable unit in accordance with the difference of the level of the received signal from the maximum level before being input into the adder. With this configuration, the C/N ratio of the synthesized signal output from the adder can be maximized without being influenced by a change in ambient conditions, for example, the temperature or the power supply voltage.

The phase shifter may be interposed between each of the receiver circuits and the adder. With this arrangement, the signals from the receiver circuits can be precisely in phase with each other immediately before being input into the adder.

The level variable unit may be connected in series with the corresponding phase shifter. With this arrangement, the levels of the signals before being input into the adder can be precisely proportional to the level difference between the signals output from the receiver circuits.

### BRIEF DESCRIPTION OF THE DRAWINGS

Fig. 1 is a circuit diagram illustrating the configuration of a diversity reception device according to an embodiment of the present invention; and
Fig. 2 is a circuit diagram illustrating the configuration of a known diversity reception device.

### DESCRIPTION OF THE PREFERRED EMBODIMENTS

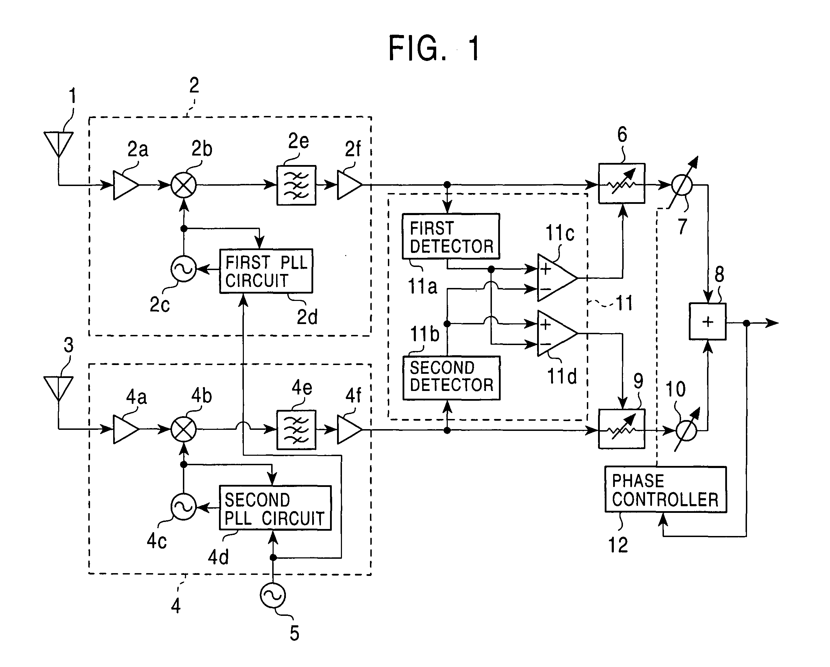

A diversity reception device formed of two reception systems constructed in accordance with an embodiment of the present invention is described below with reference to Fig. 1.

A first receiver circuit 2 is connected to a first antenna 1. The first receiver circuit 2 includes a first low-noise amplifier 2a for amplifying a received signal, a first mixer 2b for converting the frequency of the amplified signal, a first oscillator 2c for supplying a local oscillation signal to the first mixer 2b, a first phase-locked loop (PLL) circuit 2d for controlling the oscillation frequency of the first oscillator 2c, a first intermediate frequency amplifier 2f for amplifying an intermediate frequency signal output from the first mixer 2b, and a first bandpass filter 2e interposed between the first mixer 2b and the first intermediate frequency amplifier 2f.

A second receiver circuit 4 is connected to a second antenna 3. The second receiver circuit 4 includes a second low-noise amplifier 4a for amplifying a received signal, a second mixer 4b for converting the frequency of the amplified signal, a second oscillator 4c for supplying a local oscillation signal to the second mixer 4b, a second phase-locked loop (PLL) circuit 4d for controlling the oscillation frequency of the second oscillator 4c, a second intermediate frequency amplifier 4f for amplifying an intermediate frequency signal output from the second mixer 4b, and a second bandpass filter 4e interposed between the second mixer 4b and the second intermediate frequency amplifier 4f.

A reference signal is supplied to the first and second PLL circuits 2b and 4b from a reference oscillator 5.

A signal (intermediate frequency signal) output from the first receiver circuit 2 is input into an adder 8 via a first level-variable unit 6 and a first phase shifter 7, which are connected in series with each other. A signal output from the second receiver circuit 4 is input into the adder 8 via a second level-variable unit 9 and a second phase shifter 10, which are connected in series with each other. The first and second level-variable units 6 and 9 may be formed of variable attenuators, as shown in Fig. 1, or may be formed of variable gain amplifiers. The first or second phase shifter 7 or 10 does not have to be interposed between the adder 8 and the first or second receiver circuit 2 or 4, respectively, and may be disposed in the first or second receiver circuit 2 or 4 so that, for example, the phase of a local oscillation signal, can be shifted. In short, the first and second phase shifters 7 and 10 may be disposed anywhere as long as they can shift the received signals to be input into the adder 8 in phase with each other.

A level comparator unit 11 compares the level of the signal output from the first receiver circuit 2 with that output from the second receiver circuit 4, and also controls the first and second level-variable units 6 and 9 according to the detected level difference.

The level comparator unit 11 includes a first detector 11a for detecting the level of the signal output from the first receiver circuit 2, a second detector 11b for detecting the level of the signal output from the second receiver circuit 4, and first and second comparators 11c and 11d for comparing the two detected levels.

The detected signal output from the first detector 11a is input into the non-inverting input terminal (+) of the first comparator 11c, and the detected signal output from the second detector 11b is input into the inverting input terminal (-) of the first comparator 11c. The detected signal output from the second detector 11b is input into the non-inverting input terminal (+) of the second comparator 11d, and the detected signal output from the first detector 11a is input into the inverting input terminal (-) of the second comparator 11d.

The first and second comparators 11c and 11d output the voltage corresponding to the difference between the signal levels detected by the first and second detectors 11a and 11b. Then, the first level-variable unit 6 is controlled by the first comparator 11c, while the second variable unit 9 is controlled by the second comparator 11d.

The first and second phase shifters 7 and 10 are controlled by a phase controller 12. The phase controller 12 monitors the level of the synthesized signal output from the adder 8 so as to control one of or both the first and second phase shifters 7 and 10 so that the level of the synthesized signal is maximized. Accordingly, when the synthesized signal is maximized, the signal input from the first phase shifter 7 to the adder 8 is in phase with the signal input from the second phase shifter 10 to the adder 8. An OFDM demodulator (not shown) is provided at the stage subsequent to the adder 8 so as to demodulate the synthesized signal.

In the diversity reception device constructed as described above, when the level of the signal output from the first receiver circuit 2 is higher than that output from the second receiver circuit 4, the first comparator 11c controls the gain of the first level-variable unit 6 to be zero, and the second comparator 11d controls the second level-variable unit 9 to increase the attenuation in proportion to the level difference. In contrast, when the level of the signal output from the first receiver circuit 2 is lower than that output from the second receiver circuit 4, the operation of the first level-variable unit 6 and the operation of the second level-variable unit 9 are opposite to those described above. That is, the signal having a level lower than the other signal is attenuated by the corresponding level variable unit 6 or 9 in accordance with the level difference.

According to the above-described configuration, the first and second level-variable units 6 and 9 are controlled in accordance with the level difference between the signals output from the first and second receiver circuits 2 and 4. The gains of the received signals output from the first and second receiver circuits 2 and 4 are changed in a similar manner in spite of variations in ambient conditions, and thus, the level difference is maintained at a constant level. Therefore, the difference between the signal levels controlled by the first and second level-variable units 6 and 9 are proportional to that of the signals output from the first and second receiver circuits 2 and 4. As a result, the C/N ratio of the synthesized signal output from the adder 8 is maximized without being influenced by the ambient conditions.

The diversity reception device of the above-described embodiment has been described in the context of two systems, each including an antenna and a receiver circuit. However, the present invention is not restricted to this configuration, and may include, for example, three systems, each including an antenna and a receiver circuit. In any case, the signal having a level lower than the other signals should be attenuated in accordance with the level difference of the received signals output from the systems.

Instead of an analog circuit, the level comparator unit 11 may be formed of a digital circuit, in which case, it can digitally control the first and second level-variable units 6 and 9.

## Claims

1. A diversity reception device comprising:
a plurality of antennas;
a plurality of receiver circuits connected to the corresponding antennas;
adder means for adding received signals output from the receiver circuits;
phase shifter means for allowing the received signals to be input into the adder means in phase with each other;
level comparator means for comparing levels of the received signals output from the receiver circuits; and
level variable means being interposed between each of the receiver circuits and the adder means and being controlled by the level comparator means,
wherein each of the received signals other than the received signal having the maximum level is relatively attenuated by the level variable means in accordance with the difference of the level of the received signal from the maximum level before being input into the adder means.

2. A diversity reception device according to claim 1, wherein the phase shifter means is interposed between each of the receiver circuits and the adder means.

3. A diversity reception device according to claim 1 or 2, wherein the level variable means is connected in series with the corresponding phase shifter means.
